# EUROPÄISCHE PATENTSCHRIFT

(11) **EP 0 851 744 B1**
(45) Veröffentlichungstag und Bekanntmachung des Hinweises auf die Patenterteilung: **17.11.1999**
(21) Anmeldenummer: 96931739.5
(22) Anmeldetag: 31.07.1996
(51) Int. Cl.: A61C 8/00

(54) **ENOSSALES EINZELZAHNIMPLANTAT MIT VERDREHSICHERUNG**
ENDOSSEUS SINGLE-TOOTH IMPLANT WITH ANTI-ROTATION DEVICE
IMPLANT INTRA-OSSEUX POUR DENT INDIVIDUELLE AVEC SYSTEME ANTIROTATION

(30) Priorität: 20.09.1995 DE 19534979
(43) Veröffentlichungstag der Anmeldung: 08.07.1998
(73) Patentinhaber: IMZ-Fertigungs- und Vertriebsgesellschaft für dentale Technologie mbH, 70794 Filderstadt (DE)
(72) Erfinder: DÜRR, Walter, D-75196 Remchingen (DE); KIRSCH, Axel, D-70184 Stuttgart (DE)
(74) Vertreter: Goddar, Heinz J., Dr.
(86) Internationale Anmeldenummer: DE9601455
(87) Internationale Veröffentlichungsnummer: WO9710769

(56) Entgegenhaltungen:
- DE-A- 4 028 855
- DE-A- 4 127 839

## Beschreibung

Die Erfindung betrifft ein enossales Einzelzahnimplantat für einen festsitzenden Zahnersatz, mit einem im wesentlichen zylindrischen, in eine in einen Kieferknochen eingebrachte Bohrung einsetzbaren Grundkörper, der eine zu seinem koronalen Ende offene Blindbohrung aufweist, einer an den koronalen Stirnrand des Grundkörpers verdrehgesichert ansetzbaren Distanzhülse, die einen zervikalen Zentrierbund aufweist, der in eine am koronalen Ende des Grundkörpers vorgesehene hohlzylindrische Ringausnehmung einsetzbar ist, eine in koronaler Richtung an den Zentrierbund anschließende, auf den koronalen Stirnrand des Grundkörpers aufsetzbare Schulter aufweist und mit einer zu ihrem koronalen Ende offenen Bohrung zur Aufnahme des Implantatpfostens versehen ist, wobei eine Verbindungseinrichtung zum verdrehgesicherten Verbinden der Distanzhülse mit dem Grundkörper dadurch gebildet ist, daß die hohlzylindrische Ringausnehmung des Grundkörpers mindestens ein in Umfangsrichtung wirksames Grundkörper-Formschlußelement und der Zentrierbund der Distanzhülse mindestens ein zu dem/den Grundkörper-Formschlußelement(en) komplementäres Distanzhülsen-Formschlußelement aufweist, einem in die Blindbohrung des Grundkörpers direkt oder indirekt einsetzbaren und die Distanzhülse zumindest teilweise durchsetzenden Implantatpfosten und einem Befestigungskopf für den Zahnersatz.

Bei einem Einzelzahnimplantat dieser Art, wie es aus der DE 40 28 855 C2 bekannt und beispielsweise auch Gegenstand der nicht vorveröffentlichten deutschen Patentanmeldung P 195 09 762.9-32 ist, erfolgt die Verdrehsicherung bislang in der Weise, daß die Grundkörper-Formschlußelemente am Boden der Ringausnehmung des Grundkörpers und die Distanzhülsen-Formschlußelemente, die hierzu komplementär sind, am zervikalen Stirnrand des Zentrierbundes der Distanzhülse vorgesehen sind. Fertigungstechnisch sind derartige Formschlußelemente nur verhältnismäßig schwierig herzustellen, wobei es ferner in manchen Anwendungsfällen nicht sonderlich günstig ist, daß nicht die volle Tiefe der Ringausnehmung bzw. des Zentrierbundes zum Zentrieren, Fixieren und Sichern der Distanzhülse relativ zum Grundkörper zur Verfügung steht.

Auch bei einem anderen enossalen Dentalimplantat, wie es aus der US 49 60 381 vorgesehen ist, treten Schwierigkeiten ähnlicher Art auf, die darauf beruhen, daß auch dort die Formschlußelemente des Grundlkörpers mit Abstand von dessen koronalem Stirnrand innerhalb einer Blindbohrung des Grundkörpers liegen.

Aus der DE 41 27 839 A1 ist ein Implantat-Grundkörper bekannt, dessen zentrale Ringausnehmung ein Formschlußelement aufweist, welches sich unmittelbar an den koronalen Stirnrand des Grundkörpers anschließt, wobei das Formschlußelement nutenförmig gestaltet ist und das in dem Grundkörper einzusetzende Halteteil eine dazu komplementäre Gestaltung aufweist. Ein gesonderter Implantatpfosten ist dabei nicht vorgesehen.

Der Erfindung liegt die Aufgabe zugrunde, das gattungsgemäße Einzelzahnimplantat dahingehend weiterzubilden, daß bei verbesserter Fertigungsmöglichkeit eine noch genauere Führung und Zentrierung der Distanzhülse im Grundkörper gewährleistet ist.

Erfindungsgemäß wird diese Aufgabe mit der in Anspruch 1 definierten Vorrichtung gelöst.

Dabei kann vorgesehen sein, daß der Zentrierbereich des Grundkörpers mit einem Innengewinde versehen ist.

Die Erfindung sieht ggf. auch vor, daß zervikal an den Zentrierbereich des Grundkörpers ein weiteres Innengewinde anschließt.

Eine weitere Ausführungsform der Erfindung zeichnet sich dadurch aus, daß der Implantatpfosten die Distanzhülse vollständig durchsetzt und in das weitere Innengewinde nahe dem zervikalen Ende des Grundkörpers einschraubbar ist.

Nach der Erfindung kann auch vorgesehen sein, daß das/mindestens eines der Grundkörper-Formschlußelement(e) die Form einer sich parallel zur Längsachse des Grundkörpers erstreckenden, koronal offenen Formschlußnut hat.

Die Erfindung schlägt ferner vor, daß die Formschlußnut(en) in einer radialen Ebene im wesentlichen kreissegmentförmigen Querschnitt hat/haben.

Dabei kann vorgesehen sein, daß die Formschlußnut(en) in einer radialen Ebene im wesentlichen dreieckigen Querschnitt hat/haben.

Ferner schlägt die Erfindung ggf. vor, daß die Formschlußnut(en) in einer radialen Ebene annähernd rechteckig-gebogenen Querschnitt hat/ haben.

Auch kann nach der Erfindung vorgesehen sein, daß die Formschlußnut(en) zervikal offen ist/sind.

Nach der Erfindung kann auch vorgesehen sein, daß die Formschlußnut(en) sich von ihrem koronalen zu ihrem zervikalen Ende verringernden Querschnitt aufweist/aufweisen.

Die Erfindung schlägt ferner vor, daß der Querschnitt der Formschlußnut(en) sich von ihrem koronalen zu ihrem zervikalen Ende radial verringert.

Dabei kann vorgesehen sein, daß die Grundkörper-Formschlußelemente bezüglich des Umfangs des Grundkörpers eine 30°-Teilung aufweisen.

Ferner schlägt die Erfindung vor, daß die GrundkörperFormschlußelemente bezüglich des Umfangs des Grundkörpers eine 60°-Teilung aufweisen.

Auch kann nach der Erfindung vorgesehen sein, daß die Anzahl der Distanzhülsen-Formschlußelemente kleiner ist als diejenige der Grundkörper-Pormschlußelemente.

Eine weitere Ausführungsform der Erfindung zeichnet sich dadurch aus, daß der Formschlußbereich des Grundkörpers zwischen dem/den Grundkörper-Formschlußelement(en) und dem Führungsbereich eine ringförmige Hinterschneidung aufweist.

Nach der Erfindung kann auch vorgesehen sein, daß die Innenwandung der Ringausnehmung des Grundkörpers eine sich zervikal vom koronalen Stirnrand des Grundkörpers bis in den Bereich des/der Grundkörper-Formschlußelemente(s) konisch verjüngende Abschrägung aufweist.

Schließlich schlägt die Erfindung vor, daß der Formschlußabschnitt des Zentrierbundes zwischen der Schulter und dem/den Distanzhülsen-Formschlußelement(en) eine ringförmige Hinterschneidung aufweist.

Der Erfindung liegt die überraschende Erkenntnis zugrunde, daß es gelingt, das gattungsgemäße Einzelzahnimplantat, welches sich in der Praxis durchaus bewährt hat, noch dadurch zu verbessern, daß die Formschlußelemente des Grundkörpers unmittelbar im Anschluß an dessen koronalen Stirnrand angeordnet werden, mit entsprechender Anordnung und Ausbildung der hierzu komplementären Distanzhülsen-Formschlußelemente. Dadurch, daß die gesamte Tiefe der Ringausnehmung des Grundkörpers für die Zentrierung und Führung der Distanzhülse zur Verfügung steht, ergibt sich eine deutlich verbesserte Stabilität der Verbindung zwischen Distanzhülse und Grundkörper. Außerdem ermöglicht die Anordnung der Formschlußelemente in der Umfangswandung der Ringausnehmung des Grundkörpers bzw. des Zentrierbundes der Distanzhülse größeren Gestaltungsspielraum in der Art der Teilung sowie der Formgebung der Formschlußelemente.

Bei dem aus der DE 41 27 839 A1 bekannten, eingangs bereits erörterten Dentalimplantat sind zwar die Formschlußelemente in unmittelbarer Nähe des koronalen Stirnrandes des Grundkörpers bzw. der Ringschulter der Distanzhülse angeordnet, jedoch ist dieser Druckschrift insbesondere kein Hinweis auf die erfindungswesentliche Maßnahme zu entnehmen, in Kombination mit einem die Distanzhülse durchsetzenden Implantatpfosten in der beanspruchten Weise gesonderte Formschluß-, Führungs- und Zentrierabschnitte vorzusehen.

Nachstehend sind Ausführungsbeispiele anhand der schematischen Zeichnung im einzelen erläutert.

Dabei zeigt:
- Fig. 1: ein Ausführungsbeispiel des Grundkörpers des enossalen Einzelzahnimplantates nach der Erfindung im axialen Längsschnitt;
- Fig. 2:: eine Distanzhülse nebst Zahnersatz des Einzelzahnimplantates von Fig. 1 in Fig. 1 entsprechender Darstellung;
- Fig. 3:: den Grundkörper (a)) und die Distanzhülse (b)) des Einzelzahnimplantates von Fig. 1 und Fig. 2 in der Ansicht von, bezogen auf Fig. 1, oben bzw., bezogen auf Fig. 2, von unten;
- Fig. 4: in Fig. 3 entsprechender Darstellung den Grundkörper (a)) und die Distanzhülse (b)) eines anderen Ausführungsbeispieles der Erfindung; und
- Fig. 5: in Fig. 3 und Fig. 4 entsprechender Darstellung den Grundkörper (a)) und die Distanzhülse (b)) eines weiteren Ausführungsbeispieles der Erfindung.

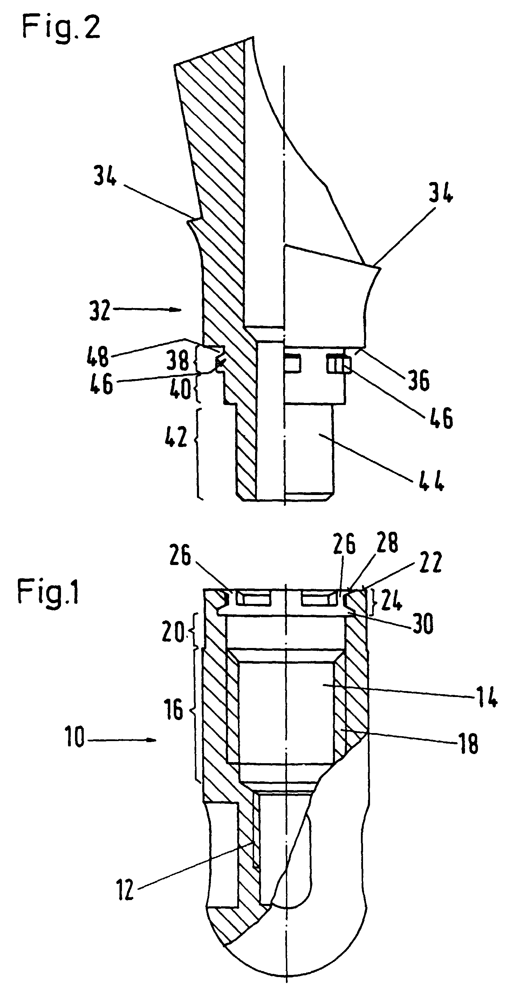

Wie Fig. 1 erkennen läßt, weist das Einzelzahnimplantat bei dem dort gezeigten Ausführungsbeispiel einen Grundkörper 10 bekannter Art auf, wie er beispielsweise in der DE-PS 40 28 855 beschrieben ist.

Der Grundkörper 10, der an seinem in Fig. 1 unten gezeigten zervikalen Ende geschlossen ausgebildet ist, weist eine zu seinem in Fig. 1 oben liegenden koronalen Ende hin offene Blindbohrung auf. Nahe dem zervikalen Ende der Blindbohrung befindet sich ein Innengewinde 12 mit verhältnismäßig kleinem Durchmesser, in das ein in Fig. 1 nicht zeichernisch dargestellter Implantatpfosten, auf den weiter unten noch eingegangen wird, einschraubbar ist. An das Innengewinde 12 des Grundkörpers 10 schließt in koronaler Richtung eine Ringausnehmung 14 mit gegenüber dem Innengewinde 12 vergrößertem Durchmesser an.

Die Ringausnehmung 14 weist in einem an das Innengewinde 12 koronal anschließenden Zentrierbereich 16 ein Innengewinde 18 auf. An den Zentrierbereich 16 der Ringausnehmung 14 schließt in koronaler Richtung ein Führungsbereich 20 an, in dem die gegenüber dem Zentrierbereich 16 hier einen vergrößerten Durchmesser aufweisende Ringausnehmung 14 eine glatte, hohlzylindrische Innenwandung hat. Von dem Führungsbereich 20 bis zu einem koronalen Stirnrand 22 des Grundkörpers 10 erstreckt sich ein Formschlußbereich 24 der Ringausnehmung 14, in dem eine Anzahl von axialen Formschlußnuten 26 in die Innenwandung der Ringausnehmung 14 eingearbeitet sind. Vom Stirnrand 22 aus weist der Formschlußbereich 24 der Ringausnehmung 14 eine konisch in zervikaler Richtung sich verjüngende Abschrägung 28 auf, die sich bis in den Bereich der Formschlußnuten 26 erstreckt. Zwischen dem Führungsbereich 20 und den Formschlußnuten 26 ist eine ringförmige Hinterschneidung 30 vorgesehen, die ein spanablagerungsfreies Fertigen der Formschlußnuten 26 erleichtert.

Eine in Fig. 2 gezeigte Distanzhülse 32 dient in der in der nicht vorveröffentlichten deutschen Patentanmeldung P 195 09 762.9-32 erläuterten Weise als Befestigungskopf für einen nicht gezeigten festsitzenden Zahnersatz und ist mit einer umlaufenden Ansetzschulter 34 für den Zahnersatz versehen. Im Anschluß an eine auf den Stirnrand 22 des Grundkörpers 10 aufsetzbare Schulter 36, die als umlaufende Ringschulter ausgebildet ist, weist die Distanzhülse 32 in zervikaler Richtung einen Formschlußabschnitt 38, einen Führungsabschnitt 40 und einen Zentrierabschnitt 42 eines Zentrierbundes 44 auf. Im Formschlußbereich 38 sind eine Anzahl von axial verlaufenden Formschlußnasen 46 vorgesehen, die in ihrer Form und Anordnung, wenngleich nicht notwendigerweise in ihrer Anzahl, den Formschlußnuten 26 des Grundkörpers 10 entsprechen. Der Formschlußbereich 38 der Distanzhülse 32 weist zwischen der Schulter 36 und den Formschlußnasen 46 eine ringförmige Hinterschneidung 48 auf, welche die spanablagerungsvermeidende Fertigung der Formschlußnasen 46 erleichtert.

Beim Einsetzen der Distanzhülse 32, die mit einer axialen Längsbohrung versehen ist, deren Innendurchmesser dem Außendurchmesser des nicht gezeigten Implantatpfostens entspricht, in den Grundkörper 10 greift der Zentrierabschnitt 42 des Zentrierbundes 44 in den Zentrierbereich 16 der Ringausnehmung 14 ein, wobei also die glatte Zylindermantelfläche des Zentrierbereiches 42 an der inneren Begrenzung des Innengewindes 18 des Zentrierbereiches 16 des Grundkörpers 10 zur Anlage kommt. Der Führungsabschnitt 40 der Distanzhülse 32 sitzt mit Paßsitz in dem Führungsbereich 20 des Grundkörpers 10. Die Formschlußnasen 46 greifen in die Formschlußnuten 26 ein, während die Schulter 36 an dem Stirnrand 22 zur Anlage kommt. Damit ist die Distanzhülse 32 verdrehgesichert mit dem Grundkörper 10 verbunden. Mittels des die Distanzhülse 32 durchsetzenden Implantatpfostens, der in das Innengewinde 12 des Grundkörpers 10 eingeschraubt wird, läßt sich die Distanzhülse 32 fest mit dem Grundkörper 10 verbinden. Bei anderen Ausführungsbeispielen als demjenigen, welches in Fig. 1 und 2 gezeigt ist, kann das Innengewinde 18 des Grundkörpers 10 zum Einschrauben einer andersartig aufgebauten Distanzhülse, beispielsweise einer zweigeteilten, wie sie aus der DE-PS 40 28 855 bekannt ist, verwendet werden.

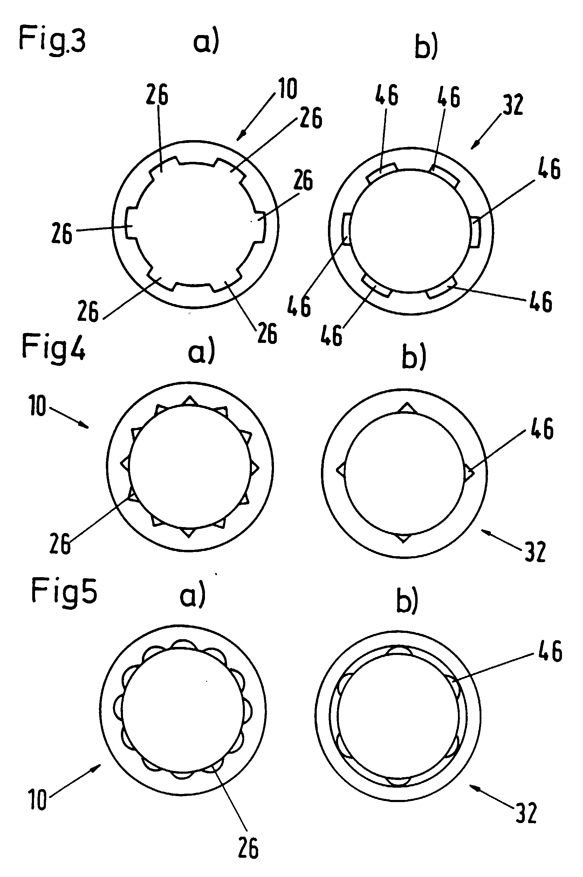

Wie Fig. 3 a) zeigt, weist der Grundkörper 10 in seinem Formschlußbereich in 60°-Teilung sechs axiale Formschlußnuten 26 auf, die bei dem gezeigten Ausführungsbeispiel die Querschnittsform von Rechtecken mit im wesentlichen tangential verlaufender, wenn auch gebogener Längskante haben. Entsprechend Fig. 3 b) ist die Distanzhülse 32 beim Ausführungsbeispiel von Fig. 1 und 2 mit sechs axialen Formschlußnasen 46 versehen. Bei dem Ausführungsbeispiel von Fig. 4 weist der Grundkörper 10 wiederum, wie Fig. 4 a) zeigt, in 30°-Teilung 12 Formschlußnuten 26 auf, während, entsprechend Fig. 4 b), die Distanzhülse 32 lediglich mit vier Formschlußnasen 46 versehen ist. Die Formschlußnuten 26 und die Formschlußnasen 46 haben in diesem Fall in zur Längsachse des Grundkörpers bzw. der Distanzhülse senkrechter Ebene dreieckigen Querschnitt. Anzumerken ist, daß die Distanzhülse 32 hier lediglich vier Formschlußnasen 46 mit 90°-Teilung aufweist.

Bei dem Ausführungsbeispiel von Fig. 5, weist der Grundkörper 10 in 30°-Teilung zwölf Formschlußnuten 26 mit in einer zur Längsachse des Grundkörpers 10 senkrechten Ebene kreissegmentartigem Querschnitt auf. Die Distanzhülse 32 ist entsprechend Fig. 5 b) mit sechs Formschlußnasen 46 entsprechenden Querschnittes versehen.

Je nach Teilung bzw. Teilungsverhältnis des Grundkörpers 10 bzw. der Distanzhülse 32 läßt sich die Distanzhülse 32 in unterschiedlichen Rotationsstellungen in den Grundkörper 10 einsetzen, wodurch dem behandelnden Arzt eine Anzahl von Gestaltungsmöglichkeiten zur Verfügung steht.

## Patentansprüche

1. Enossales Einzelzahnimplantat für einen festsitzenden Zahnersatz, mit einem im wesentlichen zylindrischen, in eine in einen Kieferknochen eingebrachte Bohrung einsetzbaren Grundkörper (10), der eine zu seinem koronalen Ende offene Blindbohrung aufweist, einer an den koronalen Stirnrand des Grundkörpers verdrehgesichert ansetzbaren Distanzhülse (32), die einen zervikalen Zentrierbund (44) aufweist, der in eine am koronalen Ende des Grundkörpers vorgesehene hohlzylindrische Ringausnehmung (14) einsetzbar ist, eine in koronaler Richtung an den Zentrierbund anschließende, auf den koronalen Stirnrand des Grundkörpers aufsetzbare Schulter (36) aufweist und mit einer zu ihrem koronalen Ende offenen Bohrung zur Aufnahme des Implantatpfostens versehen ist, wobei eine Verbindungseinrichtung zum verdrehgesicherten Verbinden der Distanzhülse mit dem Grundkörper dadurch gebildet ist, daß die hohlzylindrische Ringausnehmung (14) des Grundkörpers mindestens ein in Umfangsrichtung wirksames Grundkörper-Formschlußelement (26) und der Zentrierbund der Distanzhülse mindestens ein zu dem/den Grundkörper-Formschlußelement(en) komplementäres Distanzhülsen-Formschlußelement (46) aufweist, einem in die Blindbohrung des Grundkörpers direkt oder indirekt einsetzbaren und die Distanzhülse zumindest teilweise durchsetzenden Implantatpfosten und einem Befestigungskopf für den Zahnersatz, dadurch gekennzeichnet, daß das/die Grundkörper-Formschlußelement(e) (26) an der Innenwandung der Ringausnehmung (14) in einem Formschlußbereich (24) derselben unmittelbar im Anschluß an den Stirnrand (22) des Grundkörpers (10) vorgesehen ist/sind; daß (eine) der Längsmittelachse der Ringausnehmung (14) nächstliegende(n) Führungsfläche(n) des/der Grundkörper-Formschlußelemente(s) (26) auf einer Zylinderfläche liegt/liegen, deren Durchmesser demjenigen eines sich zervikal an den Formschlußbereich (24) anschließenden Führungsbereiches (20) der Ringausnehmung (14) mit im wesentlichen glatter Umfangswandung entspricht; daß an den Führungsbereich (20) der Ringausnehmung (14) zervikal ein Zentrierbereich (16) der Ringausnehmung (14) mit gegenüber dem Führungsbereich (20) verringertem Durchmesser anschließt; daß das/die Distanzhülsen-Formschlußelement(e) zervikal im Anschluß an die Schulter (36) der Distanzhülse (32) an der zylindrischen Außenwandung des Zentrierbundes (44) in einem Formschlußabschnitt (38) desselben vorgesehen ist/sind; daß die radial am nächsten zur Längsmittelachse des Zentrierbundes (44) liegende(n) Umfangsfläche(n) des Formschlußabschnittes (38) auf der/denen das wenigstens eine Distanzhülsen-Formschlußelement (46) angeordnet ist, auf einer Zylinderfläche liegt liegen, deren Durchmesser im wesentlichen dem Innendurchmesser des Führungsbereiches (20) des Grundkörpers (10) entspricht; daß an den Formschlußabschnitt (38) zervikal ein zylindrischer Führungsabschnitt (40) anschließt, dessen Außendurchmesser im wesentlichen dem Innendurchmesser des Führungsbereiches (20) des Grundkörpers (10) entspricht; und daß an den Führungsabschnitt (40) zervikal ein zylinderförmiger Zentrierabschnitt (42) anschließt, dessen Außendurchmesser im wesentlichen mit dem Innendurchmesser des Zentrierbereiches (16) des Grundkörpers (10) übereinstimmt.

2. Einzelzahnimplantat nach Anspruch 1, dadurch gekennzeichnet, daß der Zentrierbereich (16) des Grundkörpers (10) mit einem Innengewinde (18) versehen ist.

3. Einzelzahnimplantat nach Anspruch 1 oder 2, dadurch gekennzeichnet, daß zervikal an den Zentrierbereich (16) des Grundkörpers (10) ein weiteres Innengewinde (12) anschließt.

4. Einzelzahnimplantat nach Anspruch 3, dadurch gekennzeichnet, daß der Implantatpfosten die Distanzhülse (32) vollständig durchsetzt und in das weitere Innengewinde (12) nahe dem zervikalen Ende des Grundkörpers (10) einschraubbar ist.

5. Einzelzahnimplantat nach einem der vorangehenden Ansprüche, dadurch gekennzeichnet, daß das/mindestens eines der Grundkörper-Formschlußelement(e) (26) die Form einer sich parallel zur Längsachse des Grundkörpers (10) erstreckenden, koronal offenen Formschlußnut hat.

6. Einzelzahnimplantat nach Anspruch 5, dadurch gekennzeichnet, daß die Formschlußnut(en) (26) in einer radialen Ebene im wesentlichen kreissegmentförmigen Querschnitt hat/haben.

7. Einzelzahnimplantat nach Anspruch 5, dadurch gekennzeichnet, daß die Formschlußnut(en) (26) in einer radialen Ebene im wesentlichen dreieckigen Querschnitt hat/haben.

8. Einzelzahnimplantat nach Anspruch 5, dadurch gekennzeichnet, daß die Formschlußnut(en) (26) in einer radialen Ebene annähernd rechteckig-gebogenen Querschnitt hat/ haben.

9. Einzelzahnimplantat nach einem der Ansprüche 5 bis 8, dadurch gekennzeichnet, daß die Formschlußnut(en) (26) zervikal offen ist/sind.

10. Einzelzahnimplantat nach einem der Ansprüche 5 bis 9, dadurch gekennzeichnet, daß die Formschlußnut(en) (26) sich von ihrem koronalen zu ihrem zervikalen Ende verringernden Querschnitt aufweist/aufweisen.

11. Einzelzahnimplantat nach Anspruch 10, dadurch gekennzeichnet, daß der Querschnitt der Formschlußnut(en) (26) sich von ihrem koronalen zu ihrem zervikalen Ende radial verringert.

12. Einzelzahnimplantat nach einem der vorangehenden Ansprüche mit mehreren Grundkörper-Formschlußelementen, dadurch gekennzeichnet, daß die Grundkörper-Formschlußelemente (26) bezüglich des Umfangs des Grundkörpers (10) eine 30°-Teilung aufweisen.

13. Einzelzahnimplantat nach einem der Ansprüche 1 bis 11 mit mehreren Grundkörper-Formschlußelementen, dadurch gekennzeichnet, daß die Grundkörper-Formschlußelemente (26) bezüglich des Umfangs des Grundkörpers (10) eine 60°-Teilung aufweisen.

14. Einzelzahnimplantat nach einem der vorangehenden Ansprüche mit mehreren Grundkörper-Formschlußelementen, dadurch gekennzeichnet, daß die Anzahl der Distanzhülsen-Formschlußelemente (46) kleiner ist als diejenige der Grundkörper-Formschlußelemente (26).

15. Einzelzahnimplantat nach einem der vorangehenden Ansprüche, dadurch gekennzeichnet, daß der Formschlußbereich (24) des Grundkörpers (10) zwischen dem/den Grundkörper-Formschlußelement(en) (26) und dem Führungsbereich (20) eine ringförmige Hinterschneidung (30) aufweist.

16. Einzelzahnimplantat nach einem der vorangehenden Ansprüche, dadurch gekennzeichnet, daß die Innenwandung der Ringausnehmung (14) des Grundkörpers (10) eine sich zervikal vom koronalen Stirnrand (22) des Grundkörpers (10) bis in den Bereich des/der Grundkörper-Formschlußelemente(s) (26) konisch verjüngende Abschrägung (28) aufweist.

17. Einzelzahnimplantat nach einem der vorangehenden Ansprüche, dadurch gekennzeichnet, daß der Formschlußabschnitt (38) des Zentrierbundes (44) zwischen der Schulter (36) und dem/den Distanzhülsen-Formschlußelement(en) (46) eine ringförmige Hinterschneidung (48) aufweist.

18. Einzelzahnimplantat nach einem der vorangehenden Ansprüche, dadurch gekennzeichnet, daß die axiale Distanz zwischen dem Stirnrand (22) des Grundkörpers (10) und dem zervikalen Ende des Zentrierbereiches (16) des Grundkörpers (10) größer ist als der Innendurchmesser der Ringausnehmung (14) im Bereich des Formschlußbereiches (24).

## Claims

1. An endo-osseous single tooth implant for a fixed dental prosthesis, comprising a substantially cylindrical base member (10) adapted to be inserted into a bore in a jawbone and having a blind bore open towards its coronal end, a spacer sleeve (32) adapted to be placed on the coronal end edge of the base member so as to be secured against turning and having a cervical centring collar (44) which is adapted to be inserted into a hollow cylindrical annular opening (14) provided at the coronal end of the base member, a shoulder (36) adjoining the centring collar in the coronal direction and adapted to be placed on the coronal end edge of the base member, and provided with a bore open towards its coronal end to receive the implant post, a connecting means for connecting the spacer sleeve to the base member so as to be secured against turning being formed by the hollow cylindrical annular opening (14) of the base member having at least one base member positive engagement element (26) operative in the peripheral direction and the centring collar of the spacer sleeve having at least one spacer sleeve positive engagement element (46) complementary to the base member positive engagement element or elements, an implant post adapted to be directly or indirectly inserted in the base member blind bore and extending at least partially through the spacer sleeve, and a fixing head for the dental prosthesis, characterised in that the base member positive engagement element or elements (26) is/are provided at the inner wall of the annular opening (14) in a positive engagement zone (24) thereof immediately adjoining the end edge (22) of the base member (10); in that a guide surface or guide surfaces of the base member positive engagement element or elements (26) nearest the longitudinal central axis of the annular opening (14) lies/lie on a cylindrical surface, the diameter of which corresponds to that of a guide zone (20) of the annular opening (14) having a substantially smooth peripheral wall and adjoining the positive engagement zone (24) cervically; in that a centring zone (16) of the annular opening (14) of reduced diameter compared with the guide zone (20) cervically adjoins the guide zone (20) of the annular opening (14); in that the spacer sleeve positive engagement element or elements is/are provided cervically adjoining the shoulders (36) of the spacer sleeve (32) at the cylindrical outer wall of the centring collar (44) in a positive engagement section (38) thereof; in that the peripheral surface or surfaces of the positive engagement section (38) on which the at least one spacer sleeve positive engagement element (46) is disposed and which is closest radially to the longitudinal central axis of the centring collar (44) lie/lies on a cylindrical surface whose diameter corresponds substantially to the inside diameter of the guide zone (20) of the base member (10); in that the positive engagement section (38) is followed cervically by a cylindrical guide section (40), the outside diameter of which corresponds substantially to the inside diameter of the guide zone (20) of the base member (10); and in that adjoining the guide section (40) cervically is a cylindrical centring section (42), the outside diameter of which corresponds substantially to the inside diameter of the centring zone (16) of the base member (10).

2. A single tooth implant according to claim 1, characterised in that the centring zone (16) of the base member (10) is provided with an internal screwthread (18).

3. A single tooth implant according to claim 1 or 2, characterised in that an additional internal screwthread (12) cervically adjoins the centring zone (16) of the base member (10).

4. A single tooth implant according to claim 3, characterised in that the implant post completely passes through the spacer sleeve (32) and is adapted to be screwed into the additional internal screwthread (12) near the cervical end of the base member (10).

5. A single tooth implant according to any one of the preceding claims, characterised in that the or at least one of the base member positive engagement element or elements (26) has the shape of a coronally open positive engagement groove extending parallel to the longitudinal axis of the base member (10).

6. A single tooth implant according to claim 5, characterised in that the positive engagement groove or grooves (26) has/have a cross-section of substantially the shape of a segment of a circle in a radial plane.

7. A single tooth implant according to claim 5, characterised in that the positive engagement groove or grooves (26) has/have a substantially triangular cross-section in a radial plane.

8. A single tooth implant according to claim 5, characterised in that the positive engagement groove or grooves (26) has/have an approximately rectangularly bent cross-section in a radial plane.

9. A single tooth implant according to any one of claims 5 to 8, characterised in that the positive engagement groove or grooves (26) is/are cervically open.

10. A single tooth implant according to any one of claims 5 to 9, characterised in that the positive engagement groove or grooves (26) has/have a cross-section which decreases from its/their coronal end to its/their cervical end.

11. A single tooth implant according to claim 10, characterised in that the cross-section of the positive engagement groove or grooves (26) decreases from the coronal end to the cervical end thereof.

12. A single tooth implant according to any one of the preceding claims with a plurality of base member positive engagement elements, characterised in that the base member positive engagement elements (26) have a 30° pitch with respect to the periphery of the base member (10).

13. A single tooth implant according to any one of claims 1 to 7 with a plurality of base member positive engagement elements, characterised in that the base member positive engagement elements (26) have a 60° pitch with respect to the periphery of the base member (10).

14. A single tooth implant according to any one of the preceding claims with a plurality of base member positive engagement elements, characterised in that the number of spacer sleeve positive engagement elements (46) is less than the number of base member positive engagement elements (26).

15. A single tooth implant according to any one of the preceding claims, characterised in that the positive engagement zone (24) of the base member (10) has an annular undercut (30) between the base member positive engagement element or elements (26) and the guide zone (20).

16. A single tooth implant according to any one of the preceding claims, characterised in that the inner wall of the annular opening (14) of the base member (10) has a bevel (28) tapering conically cervically from the coronal end edge (22) of the base member (10) to the region of the base member positive engagement element or elements (26).

17. A single tooth implant according to any one of the preceding claims, characterised in that the positive engagement section (38) of the centring collar (44) has an annular undercut (48) between the shoulder (36) and the spacer sleeve positive engagement element or elements (46).

18. A single tooth implant according to any one of the preceding claims, characterised in that the axial distance between the end edge (22) of the base member (10) and the cervical end of the centring zone (16) of the base member (10) is greater than the inside diameter of the annular opening (14) in the region of the positive engagement zone (24).

## Revendications

1. Implant intra-osseux pour dent individuelle destiné à une prothèse dentaire fixe, et comportant un corps de base (10), qui est sensiblement cylindrique et qui peut être inséré dans un alésage pratiqué dans un os de la mâchoire, ce corps présentant un alésage borgne s'ouvrant en direction de son extrémité coronale ; une douille d'écartement (32), qui peut être appliquée au niveau du bord frontal coronal du corps de base de manière antitorsion et qui présente un collet de centrage cervical (44), qui peut être inséré dans un évidement annulaire (14) de forme cylindrique creuse, prévu au niveau d'une extrémité coronale du corps de base, la douille présentant un épaulement (36) qui fait suite au collet de centrage dans la direction coronale et qui peut être placé sur le bord frontal coronal du corps de base, et étant pourvue d'un alésage ouvert en direction de son extrémité coronale et servant à recevoir la tige de l'implant ; dans lequel un dispositif de liaison destiné à relier, de manière antitorsion la douille d'écartement et le corps de base est formé en ce que l'évidement annulaire (14) de forme cylindrique creuse du corps de base présente au moins un élément à liaison mécanique de corps de base (26), actif dans le sens périphérique, et en ce que le collet de centrage de la douille d'écartement présente au moins un élément à liaison mécanique de douille d'écartement (46), complémentaire de l'élément ou des éléments à liaison mécanique de corps de base ; une tige d'implant pouvant être insérée directement ou indirectement dans l'alésage borgne du corps de base et traversant, du moins en partie, la douille d'écartement ; et une tête de fixation pour la prothèse dentaire, caractérisé en ce que l'élément ou les éléments à liaison mécanique de corps de base (26) est ou sont prévu(s) au niveau de la paroi intérieure de l'évidement annulaire (14) dans une zone à liaison mécanique (24) de celui-ci se raccordant directement au bord frontal (22) du corps de base (10) ; en ce que une ou plusieurs surface(s) de guidage de l'élément ou des éléments à liaison mécanique de corps de base (26), voisine(s) de l'axe longitudinal médian de l'évidement annulaire (14), repose(nt) sur une surface cylindrique, dont le diamètre correspond à celui d'une zone de guidage (20), faisant suite du côté cervical à la zone à liaison mécanique (24), de l'évidement annulaire (14), avec une paroi périphérique sensiblement lisse ; en ce que, à la zone de guidage (20) de l'évidement annulaire (14), se raccorde, du côté cervical, une zone de centrage (16) de l'évidement annulaire (14) avec un diamètre réduit par rapport à celui de la zone de guidage (20) ; en ce que l'élément ou les éléments à liaison mécanique de douille d'écartement est ou sont prévu(s), du côté cervical, à la suite de l'épaulement (36) de la douille d'écartement (32), au niveau de la paroi extérieure cylindrique du collet de centrage (44), dans une partie à liaison mécanique (38) de celui-ci ; en ce que la ou les surface(s) périphérique(s) de la partie à liaison mécanique (38), située(s) radialement le plus près de l'axe longitudinal médian du collet de centrage (44), et sur laquelle ou lesquelles est situé ledit au moins un élément à liaison mécanique de douille d'écartement (46), est ou sont placée(s) sur une surface cylindrique, dont le diamètre correspond sensiblement au diamètre intérieur de la zone de guidage (20) du corps de base (10) ; en ce que se raccorde, à la partie à liaison mécanique (38), du côté cervical, une partie de guidage cylindrique (40), dont le diamètre extérieur correspond sensiblement au diamètre intérieur de la zone de guidage (20) du corps de base (10) ; et en ce que se raccorde, à la partie de guidage (40), du côté cervical, une partie de centrage (42) de forme cylindrique, dont le diamètre extérieur concorde sensiblement avec le diamètre intérieur de la zone de centrage (16) du corps de base (10).

2. Implant pour dent individuelle selon la revendication 1, caractérisé en ce que la zone de centrage (16) du corps de base (10) est pourvue d'un taraudage (18).

3. Implant pour dent individuelle selon la revendication 1 ou 2, caractérisé en ce que, du côté cervical, un autre taraudage (12) fait suite à la zone de centrage (16) du corps de base (10).

4. Implant pour dent individuelle selon la revendication 3, caractérisé en ce que la tige d'implant traverse complètement la douille d'écartement (32) et peut être vissée dans l'autre taraudage (12) à proximité de l'extrémité cervicale du corps de base (10).

5. Implant pour dent individuelle selon l'une des revendications précédentes, caractérisé en ce que l'élément/au moins l'un des éléments à liaison mécanique de corps de base (26) a la forme d'une rainure à liaison mécanique, qui s'étend parallèlement à l'axe longitudinal du corps de base (10) et qui est ouverte du côté coronal.

6. Implant pour dent individuelle selon la revendication 5, caractérisé en ce que la ou les rainure(s) à liaison mécanique (26) présente(nt), dans un plan radial, une section transversale sensiblement en forme de segment de cercle.

7. Implant pour dent individuelle selon la revendication 5, caractérisé en ce que la ou les rainure(s) à liaison mécanique (26) présente(nt), dans un plan radial, une section transversale sensiblement triangulaire.

8. Implant pour dent individuelle selon la revendication 5, caractérisé en ce que la ou les rainure(s) à liaison mécanique (26) présente(nt), dans un plan radial, une section transversale coudée approximativement à angle droit.

9. Implant pour dent individuelle selon l'une des revendications 5 à 8, caractérisé en ce que la ou les rainure(s) à liaison mécanique (26) est ou sont ouverte(s) du côté cervical.

10. Implant pour dent individuelle selon l'une des revendications 5 à 9, caractérisé en ce que la ou les rainure(s) à liaison mécanique (26) présente(nt) une section transversale qui va en diminuant depuis l'extrémité coronale jusqu'à l'extrémité cervicale.

11. Implant pour dent individuelle selon la revendication 10, caractérisé en ce que la section transversale de la ou des rainure(s) à liaison mécanique (26) diminue, de manière radiale, depúis l'extrémité coronale jusqu'à l'extrémité cervicale.

12. Implant pour dent individuelle selon l'une des revendications précédentes avec plusieurs éléments à liaison mécanique de corps de base, caractérisé en ce que les éléments à liaison mécanique de corps de base (26) présentent des écartements mutuels de 30° relativement à la périphérie du corps de base (10).

13. Implant pour dent individuelle selon l'une des revendications 1 à 11 avec plusieurs éléments à liaison mécanique de corps de base, caractérisé en ce que les éléments à liaison mécanique de corps de base (26) présentent des écartements mutuels de 60° par rapport à la périphérie du corps de base (10).

14. Implant pour dent individuelle selon l'une des revendications précédentes avec plusieurs éléments à liaison mécanique de corps de base, caractérisé en ce que le nombre des éléments à liaison mécanique de douille d'écartement (46) est plus petit que celui des éléments à liaison mécanique de corps de base (26).

15. Implant pour dent individuelle selon l'une des revendications précédentes, caractérisé en ce que la zone à liaison mécanique (24) du corps de base (10) présente, entre le ou les élément(s) à liaison mécanique de corps de base (26) et la zone de guidage (20), une contre-dépouille (30) de forme annulaire.

16. Implant pour dent individuelle selon l'une des revendications précédentes, caractérisé en ce que la paroi intérieure de l'évidement annulaire (14) du corps de base (10) présente un biseau (28) qui va en s'amincissant de façon conique, de manière cervicale à partir du bord frontal coronal (22) du corps de base (10) jusque dans la zone de l'élément ou des éléments à liaison mécanique de corps de base (26).

17. Implant pour dent individuelle selon l'une des revendications précédentes, caractérisé en ce que la partie à liaison mécanique (38) du collet de centrage (44) présente, entre l'épaulement (36) et l'élément ou les éléments à liaison mécanique de douille d'écartement (46), une contre-dépouille (48) de forme annulaire.

18. Implant pour dent individuelle selon l'une des revendications précédentes, caractérisé en ce que la distance axiale entre le bord frontal (22) du corps de base (10) et l'extrémité cervicale de la zone de centrage (16) du corps de base (10) est plus grande que le diamètre intérieur de l'évidement annulaire (14) dans la zone de la zone à liaison mécanique (24).
